# EUROPEAN PATENT SPECIFICATION

(11) **EP 1 993 734 B1**
(45) Date of publication and mention of the grant of the patent: **01.03.2017**
(21) Application number: 07747683.6
(22) Date of filing: 14.03.2007
(51) Int. Cl.: B02C 15/08, A62D 3/00, B02C 17/16, B09B 3/00, B09C 1/00, B09C 1/08

(54) **MILLING APPARATUS**
MAHLVORRICHTUNG
APPAREIL DE FRAISAGE

(30) Priority: 15.03.2006 NZ 54596006
(43) Date of publication of application: 26.11.2008
(73) Proprietor: MCD Technology Limited, Auckland (NZ)
(72) Inventor: BLACK, Bryan Geoffrey, Auckland (NZ); WILLIAMS, Owen Ross, Auckland (NZ)
(74) Representative: Boult Wade Tennant
(86) International application number: PCT/NZ2007/000055
(87) International publication number: WO 2007/105972

(56) References cited:
- WO-A1-01/83038
- WO-A1-01/83127
- GB-A- 384 736
- US-A- 2 208 077
- US-A- 5 427 607
- US-A- 5 648 591

## Description

### DISCLOSURE OF INVENTION

The present invention has as one object, or an alternative object, better reactivity owing to preferably higher kinetic energies of the material impacting impact elements (usually balls) in the milling apparatus.

Another or alternative object is to effect mechano-chemical milling by the input of energy merely to rotate a substantially horizontally aligned agitation member or assembly.

Another or alternative object is to reduce energy inputs required for a materials through put.

At least one of these objects is achievable by reliance upon a shaft which carries (preferably separately fitted and sacrificial) agitated forms ("agitators") which rotate with the shaft. Such agitators can have a variety of different actions including flinging. Such agitators also can be adapted to cause a gradual migration of solids material in a direction parallel to the rotational axis of the shaft thereby to maximise or increase dwell time in the milling apparatus between an inlet and an outlet.

We have also found that the wear on agitators does require frequent downtime. The agitator forms tend to erode quicker than any balls (usually of steel) or other impact elements confined to be agitated by the agitators.

### MILLING APPARATUS

### TECHNICAL FIELD

The present invention relates to milling apparatus.

The present invention in preferred forms relates to milling apparatus of a kind suitable for performing mechano-chemical or triboplasma reactions in respect of an infed solid material and/or optionally one or more reagents and/or catalysts. The invention therefore extends to plant, procedures and products of such plant usage and such procedures.

### BACKGROUND ART

In our PCT Specifications WO0183038, WO0183127 and WO02072272 we disclose apparatus and methods for reducing the halo-organic content of a matrix such as a contaminated ground site. Involved in such a contaminated ground remedial procedure is the mechano-chemical modification of the halo organic content of part of a solid stream.

See by way of example the milling using quartz and glass to degrade environmental poisons disclosed in ZOZ GmbH DE10261204A1.

WO0183038 describes a method of reducing the level of at least one organo-halogen compound in and/or on a matrix is disclosed which comprises or involves milling the matrix with at least one organo-halogen compound in a ball mill with one or more of: (I) urea, (II) an iron sand, (III) steel makers slag, and/or (IV) a suitable acid.

WO0183127 describes a methodology applicable in a method of decontaminating a site having halo-organic contaminants is disclosed which includes excavating the contaminated site to derive the contaminated media, subjecting the excavated contaminated media to particle size separation to provide at least two streams, namely at least one stream of finer particle sizes ("fine stream(s)") and at least one stream of larger particle sizes ("large stream(s)"), and particularly subjecting the fine stream(s) to a dehalogenation procedure followed by blending with the large stream(s).

WO02072272 discloses an apparatus suitable for decontaminating a halo-organic contaminated media (e.g. soil) which involves a transportable ball mill coupled with a motor or engine capable of operating the ball mill. The apparatus can be moved as a whole.

Downtime, if to be kept to the minimum, requires the milling apparatus be of a kind that can be readily serviced. Scale of the apparatus is a factor yet reduce scale can detract from throughput.

It is another or alternative object of the present invention to allow a speedy servicing of the milling apparatus preferably by removal and modular replacement or by removal, servicing and it then being returned.

We have determined that in some embodiments of the present invention, a tower of a gang of separate milling apparatus that feed, preferably with the assistance of gravity, from one to the other, etc can have the individual milling apparatus quickly replaced.

Having however determined advantages in such an application milling apparatus of the present invention has more widespread application and can be used for a variety of different uses.

In one aspect the invention is milling apparatus comprising or including
a first housing defining a first chamber having an inlet and an outlet, having an at least substantially horizontal shaft rotatably driveable from externally of the first chamber, having agitator formations of or carried by the shaft within the first chamber, and having impact masses ("balls") confined in the first chamber and energisable within the first chamber upon rotation of the shaft and its agitator formations, and
a second housing defining a second chamber having an inlet and an outlet, having an at least substantially horizontal shaft rotatably driveable from externally of the second chamber, having agitator formations of or carried by the shaft within the second chamber, and having impact masses ("balls") confined in the second chamber and energisable within the second container upon rotation of the shaft and its agitator formations, the inlet of the second chamber being adapted to receive material(s) from the outlet of the first chamber.

Preferably there is a third housing defining a third chamber having an inlet and an outlet, having a shaft rotatably driveable from externally of the third chamber, having agitator formations of or carried by the shaft within the third chamber, and having impact masses ("balls") confined in the third chamber and energisable within the third chamber upon rotation of the shaft and its agitator formations, the inlet of the third chamber being adapted to receive material(s) from the outlet of the second chamber.

Optionally and preferably there is daisy-chained from the third chamber one or more further housing each defining a chamber having an inlet and an outlet having an at least substantially horizontal shaft rotatable in the chamber having agitator formations of or carried by the shaft in the chamber and having impact masses ("balls") confined in the chamber and energisable within the chamber upon rotation of the shaft and its agitator formations,

wherein there is a feed through of material(s) from outlets to inlets save from the outlet of the last of the chambers.

Preferably the chamber sequence is a frame supported series five of housings.

Preferably there is in close proximity a pug mill blender or a rotary blender and the outlet of the last of the chambers discharges continuously to a pug mill blender or a rotary blender.

Preferably there are three or more said housings each supported on a assembly on which each shaft receives a drive of its shaft.

Preferably each chamber discharges via its outlet assisted by gravity and each receives material(s) via its inlet assisted by gravity.

Preferably said chambers are at least substantially horizontally aligned cylindrical chambers each with a top inlet near one end and a bottom outlet near the other ends.

Preferably as a stack or tower of supported housings, there is a staggering of the inlet ends and outlet ends down the stack or tower.

Preferably each housing is frame supported and the housings do not bear housing to housing in each stack.

Preferably there is containment structure that allows single or multiple infeeds to atop most housing via its inlet or via inlets.

In another aspect the invention is milling apparatus comprising or including
a plurality of vessels each vessel defining a chamber and having an inlet into the chamber, an outlet from the chamber, an at least substantially horizontal shaft rotatably driveable from externally of the chamber, agitator formations carried by the shaft within the chamber, and impact masses ("balls") confined in the chamber and energisable by rotation of the shaft and agitator formations within the chamber,
a structure to support the plurality of the vessels one above each other,
a drive (whether ganged totally, not at all ganged or in part ganged), for each shaft of each vessel on the structure, and
ducted communications between outlets and inlets whereby it is possible for higher chambers to discharge material(s) into lower chambers.

In another aspect the invention is plant for milling material(s) comprising or including
a supported stack or tower of at least substantially horizontally shafted housings, each housing defining a chamber having an inlet and an outlet, having agitator formations of or carried by the shaft in the chamber, and having impact masses ("balls") retainable in the chamber and energisable by the rotation of the agitator formations,
ducting between inlets and outlets whereby there is a pathway for transmissions of material(s) from outlet(s) to inlet(s) between chambers; and
a drive or drives for the shafts.

Preferably a final outlet ducts to a rotary blender or a pug mill for blending of milled material(s) with other material(s).

Preferably the pathway is a gravity assisted cascade from chamber to chamber.

Preferably the inlets and outlets are arranged to reverse pass material(s) in each alternating chamber down a parallel aligned stack or tower of housings

Optionally there are side by side stacks.

Preferably the side by side stacks or tower can each transfer downwardly between chambers of its stack or tower.

Optionally the side by side stacks or towers can transfer from at least one chamber of one stack to at least one chamber of the other stack or tower.

Preferably all chambers housed in a containment surround.

Preferably at least some of shafted housings can be removed from their support, their ducting to an adjacent or adjacent chamber(s) and their drive.

Preferably each housing is supported out of direct contact with its neighbours.
the Invention also consists in the use of apparatus of the present invention.

**A method of remediating soil contaminated with both organic and inorganic metal contaminants,** said method comprising or including the steps of
(A) continuously
   (I) milling the contaminated soil, or a fraction thereof, optionally in the presence of mechano-chemical reagents, to effect destruction of at least some of said organic contaminants and a reduction in particle size of the soil, or fraction thereof, and
   (II) blending the milled material with one or more metal stabilising agent(s) and water, and
(B) allowing or causing the set of the blended material as a mass or masses thereby to provide an enhanced leaching resistance of the resultant blend insofar as the inorganic metal contaminants of the milled material is concerned.

The milling can involve reagents and throughputs as disclosed in our WO01/83127 mentioned above. This discloses particle size streaming and mechanochemical dehalogenation of a susceptible stream of soil by ball milling in the presence reagents such as iron sand, steel maker's slag and/or urea, and optionally also unfiltered white vinegar. Reference should also be had to the prior art admitted therein. Minerals such as quartz can be used with or without additional materials.

The blending can be as in our WO01/83127 (i.e. with less contaminated streams from the soil streaming). If the soils contained metal contaminants fixing slurries are preferred (i.e. dry blending with water addition). For example portland cement: milled material of at least 90% by dry weight: up to 10%by dry weight. The ratio will vary with the streams of materials involved. So will the blending materials. Any fixing particles capable of setting from a slurry can be appropriate (e.g. lime, bone powders, etc).

Preferably the energisation results in ball speeds of up to 20 metres/per sec and are at least 2 metres/per sec over part of each agitation.

In another aspect the invention relates to **a ready to go stack or tower insertable ball mill** to operate with horizontally aligned shafted agitator forms (and preferably under the action of a shaft coupler). Such ball mills are to be part of a procession of ball mills preferably cascade feeding progressively downwardly.

Preferably the mill includes balls as impact elements.

Preferably the ball mill has a housing for the balls (or other impact elements) and a rotatable shaft through the housing on bearings to allow the shaft to be rotated, the shaft having agitator forms (e.g. flingers) carried thereon to rotate therewith.

Preferably the agitator forms have sleeves to key to the shaft.

Preferably the shaft has a coupler to receive the complementary coupler of a drive.

Preferably the housing is cylindrical with ends, the ends having said bearings.

Preferably there is at least one inlet and at least one outlet to the housing.

Preferably the milling is conducted with bells rather than deviations in shape therefrom (e.g. barrels).

Preferably the balls are a same initial size prior use. Preferably that initial size is in the diameter range of from 5 to 40 mm (more preferably 8 to 25mm and most preferably from about 12mm to about 20mm).

In another aspect the invention is **in combination,**
a ball mill as aforesaid,
a mount in a tower or rack structure to cradle or support the housing yet to allow shaft rotation when and/or if the housing is fixed in the cradle, and
a coupler of a drive to couple to the shaft so as to drive, in use, the cradle mounted ball mill by rotating the coupled shaft.

Preferably said drive can be operated or configured to allow rotation in either direction.

Preferably there is a material feed inlet connectable to a material feed from above and/or a material outfeed to feed to below.

Preferably there is provision for a gas feed into the housing.

Preferably the milling is conducted with bells rather than deviations in shape therefrom (e.g. barrels).

Preferably the balls are a same initial size prior use. Preferably that initial size is in the diameter range of from 5 to 40 mm (more preferably 8 to 25mm and most preferably from about 12mm to about 20mm).

In another aspect the invention is **a combination as aforesaid in an operative form.**

Preferably the combination includes ready for fitment a stand-by ready to go ball mill.

In an aspect the present invention consists in or for a rack or tower of the present invention, or for cascade feed from one to another, **milling apparatus** comprising or including
a shaft having a drive coupling and carrying agitator forms ("agitators") to rotate with the shaft,
a drum or other chamber defining means ("drum") about the agitators on part of the length of the shaft thereby defining a chamber containing or to contain impact elements to be energised by agitation, the drum having an inlet and an outlet for process stream material(s),
a drive having a drive coupling to complement that of the shaft,
a support for the shafted drum which enables the drive via the coupled couplings to rotate at least the shaft and its agitators about the shaft axis when it is substantially horizontal, and
optionally the impact elements (e.g. ball, barrels, pins and/or the like masses).

The drum may rotate with the shaft. Preferably the drum is not to be or is not in rotational synchrony with the shaft (i.e. preferably it is fixed (e.g. by ties, belts or the like) in a cradle that at least aligns the shaft.

The agitators are static forms carried by the shaft and may act to fling impact masses about within the drum.

Preferably within the drum is a partition whereby impact elements to be retained can not access a said outlet but finer material(s) can. Preferably the partition is a screen fixed or carried, or both, by one or other of the drum and the shaft.

Preferably said drive can be operated or configured to allow rotation in either direction.

Preferably the milling is conducted with bells rather than deviations in shape therefrom (e.g. barrels).

Preferably the balls are a same initial size prior use. Preferably that initial size is in the diameter range of from 5 to 40 mm (more preferably 8 to 25mm and most preferably from about 12mm to about 20mm).

In another aspect the present invention consists in or for a rack or tower of the present invention, or for cascade feed from one to another, **milling apparatus** comprising or including a shaft having a drive coupling,
agitator forms ("agitators") sleeved on the shaft to rotate with the shaft,
a drum or other chamber defining means ("drum") about the agitators on part of the length of the shaft thereby defining a chamber containing or to contain impact elements to be energised by agitation, the drum having an inlet and an outlet for process stream material(s),
a drive having a drive coupling to complement that of the shaft,
a support for the shafted drum which enables the drive via the coupled couplings to rotate at least the shaft and its agitators about the shaft axis when it is substantially horizontal, and
optionally the impact elements (e.g. ball, barrels, pins and/or the like masses).

Preferably the agitator forms sleeve with a sleeve providing opening correspondence to a non round sectioned part of the shaft so as to derive a rotational drive therefrom.

The drum may rotate with the shaft but this is not preferred. Preferably the drum is not to be or is not in rotational synchrony with the shaft (i.e. preferably it is fixed (e.g. by ties, belts or the like) in a cradle that at least aligns the shaft.

Preferably said drive can be operated or configured to allow rotation in either direction.

The agitators are static forms carried by the shaft and may act to fling impact masses about within the drum.

Preferably within the drum is a partition whereby impact elements to be retained can not access a said outlet but finer material(s) can. Preferably the partition is a screen fixed or carried, or both, by one or other of the drum and the shaft.

Preferably the milling is conducted with balls rather than deviations in shape therefrom (e.g. barrels).

Preferably the balls are a same initial size prior use. Preferably that initial size is in the diameter range of from 5 to 40 mm (more preferably 8 to 25mm and most preferably from about 12mm to about 20mm).

In yet another aspect the present invention consists in horizontally shafted in or for a rack or tower of the present invention, or for cascade feed from one to another, **milling apparatus** comprising or including
a shaft having a drive coupling and carrying agitator forms ("agitators") to rotate with the shaft,
a drum or other chamber defining means ("drum") about the agitators on part of the length of the shaft thereby defining a chamber containing or to contain impact elements to be energised by agitation, the drum having an inlet and an outlet for process stream material(s),
a drive having a drive coupling to complement that of the shaft,
a support for the shafted drum which enables the drive via the coupled couplings to rotate at least the shaft and its agitators about the shaft axis, and
optionally the impact elements (e.g. ball, barrels, pins and/or the like masses).

Preferably the milling is conducted with bells rather than deviations in shape therefrom (e.g. barrels).

Preferably the balls are a same initial size prior use. Preferably that initial size is in the diameter range of from 5 to 40 mm (more preferably 8 to 25mm and most preferably from about 12mm to about 20mm).

In an aspect the present invention consists in or for a rack or tower of the present invention, or for cascade feed from one to another, **milling apparatus** comprising or including
a shaft having a drive coupling and carrying agitator forms ("agitators") to rotate with the shaft,
a drum or other chamber defining means ("drum") about the agitators on part of the length of the shaft thereby defining a chamber containing or to contain impact elements to be energised by agitation, the drum having an inlet and an outlet for process stream material(s),
a drive having a drive coupling to complement that of the shaft,
a support for the shafted drum which enables the drive via the coupled couplings to rotate at least the shaft and its agitators about the shaft axis, and
optionally the impact elements (e.g. ball, barrels, pins and/or the like masses).

Preferably the milling is conducted with balls rather than deviations in shape therefrom (e.g. barrels).

Preferably the balls are a same initial size prior use. Preferably that initial size is in the diameter range of from 5 to 40 mm (more preferably 8 to 25mm and most preferably from about 12mm to about 20mm).

The drum may rotate with the shaft. Preferably the drum is not to be or is not in rotational synchrony with the shaft (i.e. preferably it is fixed (e.g. by ties, belts or the like) in a cradle that at least aligns the shaft.

Preferably said drive can be operated or configured to allow rotation in either direction.

In another aspect the present invention consists in or for a rack or tower of the present invention, or for cascade feed from one to another, **milling apparatus** comprising or including
a shaft having a drive coupling and carrying agitator forms ("agitators") to rotate with the shaft,
a drum or other chamber defining means ("drum") about the agitators on part of the length of the shaft thereby defining a chamber containing or to contain impact elements to be energised by agitation, the drum having an inlet to receive a feed from above to discharge to below when appropriately operated with the shaft at least substantially horizontal and an outlet,
a drive having a drive coupling to complement that of the shaft,
a support for the shafted drum which enables the drive via the coupled couplings to rotate at least the shaft and its agitators about the shaft axis, and
optionally the impact elements (e.g. ball, barrels, pins and/or the like masses).

The drum may rotate with the shaft. Preferably the drum is not to be rotated or is not in rotational synchrony with the shaft (i.e. preferably it is fixed (e.g. by ties, belts or the like) in a cradle that at least aligns the shaft.

Preferably said drive can be operated or configured to allow rotation in either direction.

The agitators are static forms carried by the shaft and may act to fling impact masses about within the drum.

Preferably within the drum is a partition whereby impact elements to be retained can not access a said outlet but finer material(s) can. Preferably the partition is a screen fixed or carried, or both, by one or other of the drum and the shaft.

Preferably the milling is conducted with balls rather than deviations in shape therefrom (e.g. barrels).

Preferably the balls are a same initial size prior use. Preferably that initial size is in the diameter range of from 5 to 40 mm (more preferably 8 to 25mm and most preferably from about 12mm to about 20mm).

In another aspect the invention is **in combination,**
a ball mill as aforesaid,
a mount in a rack or tower to cradle or support the housing yet to allow shaft rotation with respect to other such ball mills when and/or if the housing is fixed or is stable in the cradle,
and
a coupler of a drive to couple to the shaft so as to drive, in use, the cradle mounted ball mill by rotating the coupled shaft.

Preferably said drive can be operated or configured to allow rotation in either direction.

Preferably there is a material feed inlet connectable to a material feed from above and/or a material outfeed to feed to below.

Preferably there is provision for a gas feed into the housing.

In another aspect the invention is **a combination as aforesaid in an operative form.**

Preferably the combination includes ready for fitment a stand-by ready to go ball mill.

In an aspect the present invention consists, **in a gang of milling apparatus where at least one feeds material to another, milling apparatus** comprising or including
a shaft having a drive coupling and carrying agitator forms ("agitators") to rotate with the shaft,
a drum or other chamber defining means ("drum") about the agitators on part of the length of the shaft thereby defining a chamber containing or to contain impact elements to be energised by agitation, the drum having an inlet and an outlet for process stream material(s), and optionally the impact elements (e.g. ball, barrels, pins and/or the like masses).

The drum may rotate with the shaft. Preferably the drum is not to be or is not in rotational synchrony with the shaft (i.e. preferably it is fixed (e.g. by ties, belts or the like) in a cradle that at least aligns the shaft.

Preferably said drive can be operated or configured to allow rotation in either direction.

Preferably the gang of milling apparatus or plurality of shafted chambers/drums has one or more of:
- an enclosure (e.g. for containment of sound, dust or the like)
- a support frame or tower
- a belt or flexible drive to each shaft via its shaft coupling
- bearing supports of the shaft in or by the drum
- removable agitators (e.g. preferably cast) from the shafts
- non circular sleeving of the agitators on the shaft in order to cause synchronous rotation
- staggering of like agitators as to rotational position along the shaft
- a shaft coupling complementary coupling to not be removable necessarily with the shaft and its coupling
- steel balls as impact elements
- pairs of milling apparatus aligned inlet to outlet so that a material flow can be achieved with a small footprint (i.e. the material moves backwards and forwards)
- a cradle mounting for the shaft of each milling apparatus/shafted drum,
- a drive to rotate the shaft(s) in either direction.

Preferably the milling is conducted with balls rather than deviations in shape therefrom (e.g. barrels).

Preferably the balls are a same initial size prior use. Preferably that initial size is in the diameter range of from 5 to 40 mm (more preferably 8 to 25mm and most preferably from about 12mm to about 20mm).

In another aspect the invention is **milling apparatus** comprising or including
a plurality shafted chambers containing impact masses capable of being energised by agitator formations carried by each shaft when rotated, each chamber having an inlet and an outlet, and
a drive or drives to rotate the shafts,
**wherein** an inlet of a first said chamber can receive a solids stream and its outlet can discharge to an inlet of a second said chamber and the outlet of that second chamber can discharge either (I) for harvesting the out put or (II) to an inlet of a third said chamber, etc.

The drum may rotate with the shaft. Preferably the drum is not to be or is not in rotational synchrony with the shaft (i.e. preferably it is fixed (e.g. by ties, belts or the like) in a cradle that at least aligns the shaft.

Preferably said drive can be operated or configured to allow rotation in either direction. Preferably the plurality of shafted chambers/drums has one or more of:
- an enclosure (e.g. for containment of sound, dust or the like)
- a support frame or tower
- a belt or flexible drive to each shaft via its shaft coupling
- bearing supports of the shaft in or by the drum
- removable agitators (e.g. preferably cast) from the shafts
- non circular sleeving of the agitators on the shaft in order to cause synchronous rotation
- staggering of like agitators as to rotational position along the shaft
- a shaft coupling complementary coupling to not be removable necessarily with the shaft and its coupling
- steel balls as impact elements
- pairs of milling apparatus aligned inlet to outlet so that a material flow can be achieved with a small footprint (i.e. the material moves backwards and forwards)
- a cradle mounting for the shaft of each milling apparatus/shafted drum.

Preferably the milling is conducted with balls rather than deviations in shape therefrom (e.g. barrels).

Preferably the balls are a same initial size prior use. Preferably that initial size is in the diameter range of from 5 to 40 mm (more preferably 8 to 25mm and most preferably from about 12mm to about 20mm).

In another aspect the invention is **in combination,**
a ball mill as aforesaid,
a mount to cradle the housing yet to allow shaft rotation when and/ or if the housing is fixed in the cradle, and
a coupler of a drive to couple to the shaft so as to drive, in use, the cradle mounted ball mill by rotating the coupled shaft.

Preferably said drive can be operated or configured to allow rotation in either direction.

Preferably there is a material feed inlet connectable to a material feed from above and/or a material outfeed to feed to below.

Preferably there is provision for a gas feed into the housing.

In another aspect the invention is **a combination as aforesaid in an operative form.**

Preferably the combination includes ready for fitment a stand-by ready to go ball mill.

In another aspect the invention is **milling apparatus** comprising or including
a plurality shafted chambers of impact masses capable of being energised by agitator formations carried by each shaft when rotated, each chamber having an inlet and an outlet, and a ganged or separate drive to rotate the shafts,
**wherein** an inlet of a first said chamber can receive a solids stream and its outlet can discharge to an inlet of a second said chamber and the outlet of that second chamber can discharge either (I) for harvesting the out put or (II) to an inlet of a third said chamber, etc.

Preferably the ganged drive is by belt or other flexible drive to each shaft.

The drum may rotate with the shaft. Preferably the drum is not to be rotated or is not in rotational synchrony with the shaft (i.e. preferably it is fixed (e.g. by ties, belts or the like) in a cradle that at least aligns the shaft.

Preferably said drive can be operated or configured to allow rotation in either direction.

Preferably each shaft can be disconnected for removal (preferably with its chamber) from the drive input to each shaft.

Preferably the gang of shafted chambers/drums has one or more of:
- an enclosure (e.g. for containment of sound, dust or the like)
- a support frame or tower
- a belt or flexible drive to each shaft via its shaft coupling
- bearing supports of the shaft in or by the drum
- removable agitators (e.g. preferably cast) from the shafts
- non circular sleeving of the agitators on the shaft in order to cause synchronous rotation
- staggering of like agitators as to rotational position along the shaft
- a shaft coupling complementary coupling to not be removable necessarily with the shaft and its coupling
- steel balls as impact elements
- pairs of milling apparatus aligned inlet to outlet so that a material flow can be achieved with a small footprint (i.e. the material moves backwards and forwards)
- a cradle mounting for the shaft of each milling apparatus/shafted drum.

Preferably the milling is conducted with balls rather than deviations in shape therefrom (e.g. barrels).

Preferably the balls are a same initial size prior use. Preferably that initial size is in the diameter range of from 5 to 40 mm (more preferably 8 to 25mm and most preferably from about 12mm to about 20mm).

In another aspect the invention is **in combination,**
a ball mill as aforesaid,
a mount to cradle the housing yet to allow shaft rotation when and/or if the housing is fixed in the cradle, and
a coupler of a drive to couple to the shaft so as to drive, in use, the cradle mounted ball mill by rotating the coupled shaft.

Preferably said drive can be operated or configured to allow rotation in either direction.

Preferably there is a material feed inlet connectable to a material feed from above and/or a material outfeed to feed to below.

Preferably there is provision for a gas feed into the housing.

In another aspect the invention is **a combination as aforesaid in an operative form.**

Preferably the combination includes ready for fitment a stand-by ready to go ball mill.

In another aspect the invention is **milling apparatus** comprising or including
a plurality shafted chambers or drums ("chambers") of impact masses capable of being energised by agitator formations carried by each shaft when rotated, each chamber having an inlet and an outlet, and
a drive or drives to rotate each of the shafts via a drive input,
**wherein** an inlet of a first said chamber can receive a solids stream and its outlet can discharge to an inlet of a second said chamber and the outlet of that second chamber can discharge either (I) for harvesting the out put or (II) to an inlet of a third said chamber, etc,
**and wherein** each shaft can be disconnected for removal (preferably with its chamber) from its drive input.

The drum may rotate with the shaft. Preferably the drum is not to be or is not in rotational synchrony with the shaft (i.e. preferably it is fixed (e.g. by ties, belts or the like) in a cradle that at least aligns the shaft.

Preferably said drive can be operated or configured to allow rotation in either direction.

Preferably the gang of milling apparatus or plurality of shafted chambers/drums has one or more of:
- an enclosure (e.g. for containment of sound, dust or the like)
- a support frame or tower
- a belt or flexible drive to each shaft via its shaft coupling
- bearing supports of the shaft in or by the drum
- removable agitators (e.g. preferably cast) from the shafts
- non circular sleeving of the agitators on the shaft in order to cause synchronous rotation
- staggering of like agitators as to rotational position along the shaft
- a shaft coupling complementary coupling to not be removable necessarily with the shaft and its coupling
- steel balls as impact elements
- pairs of milling apparatus aligned inlet to outlet so that a material flow can be achieved with a small footprint (i.e. the material moves backwards and forwards)
- a cradle mounting for the shaft of each milling apparatus/shafted drum.

In another aspect the invention is **in combination,**
a ball mill as aforesaid,
a mount to cradle the housing yet to allow shaft rotation when and/or if the housing is fixed in the cradle, and
a coupler of a drive to couple to the shaft so as to drive, in use, the cradle mounted ball mill by rotating the coupled shaft.

Preferably said drive can be operated or configured to allow rotation in either direction.

Preferably there is a material feed inlet connectable to a material feed from above and/or a material outfeed to feed to below.

Preferably there is provision for a gas feed into the housing.

In another aspect the invention is **a combination as aforesaid in an operative form.**

Preferably the combination includes ready for fitment a stand-by ready to go ball mill.

In another aspect the invention is **milling apparatus** comprising or including
a plurality shafted chambers of impact masses capable of being energised by agitator formations carried by each shaft when rotated, each chamber having an inlet and an outlet, and a drive or drives to rotate the shafts,
**wherein** an inlet of a first said chamber can receive a solids stream and its outlet can discharge to an inlet of a second said chamber and the outlet of that second chamber can discharge either (I) for harvesting the out put or (II) to an inlet of a third said chamber, etc,
**and wherein** each shafted chamber as a unit can be replaced by uncradling and/or disconnection from its drive input.

Preferably the gang of milling apparatus or plurality of shafted chambers/drums has one or more of:
- an enclosure (e.g. for containment of sound, dust or the like)
- a support frame or tower
- a belt or flexible drive to each shaft via its shaft coupling
- bearing supports of the shaft in or by the drum
- removable agitators (e.g. preferably cast) from the shafts
- non circular sleeving of the agitators on the shaft in order to cause synchronous rotation
- staggering of like agitators as to rotational position along the shaft
- a shaft coupling complementary coupling to not be removable necessarily with the shaft and its coupling
- steel balls as impact elements
- pairs of milling apparatus aligned inlet to outlet so that a material flow can be achieved with a small footprint (i.e. the material moves backwards and forwards)
- a cradle mounting for the shaft of each milling apparatus/shafted drum.

In another aspect the invention is **in combination,**
a ball mill as aforesaid,
a mount to cradle the housing yet to allow shaft rotation when and/or if the housing is fixed in the cradle, and
a coupler of a drive to couple to the shaft so as to drive, in use, the cradle mounted ball mill by rotating the coupled shaft.

Preferably said drive can be operated or configured to allow rotation in either direction.

Preferably there is a material feed inlet connectable to a material feed from above and/or a material outfeed to feed to below.

Preferably there is provision for a gas feed into the housing.

In another aspect the invention is **a combination as aforesaid in an operative form.**

Preferably the combination includes ready for fitment a stand-by ready to go ball mill.

In another aspect the invention is **a method of reducing the level of at least one organo-halogen compound in and/or on a matrix** which comprises or involves milling at least the matrix with said at least one organo-halogen compound in milling apparatus in any one or more of the aspects aforesaid.

Preferably the ball mill operation is such that a temperature of at least substantially 70°C is generated in the ball mill mix.

The matrix can be all of, or a sized stream of, organo-halogen contaminated earth, soil, clay and/or rock pieces.

Preferably the matrix has been dried prior to milling. Such drying is preferably at less than 60°C in a drier at less than 125°C.

Preferably the matrix has not been washed prior to milling.

In still another aspect the invention is **method of reducing the halo-organic content of a contaminated ground** site which comprises or includes the steps of
- excavating the contaminated site to derive contaminated media therefrom;
- streaming at least part of the contaminated media on a particle size basis to derive, relative to each other, (a) a larger particle size stream and (b) a smaller particle size stream, the larger particle size stream on a weight to weight basis being less halo-organic content contaminated than the smaller particle size stream;
- subjecting the smaller particle size stream to a mechano-chemical milling procedure in the milling apparatus of any aspect of the present invention (optionally with a suitable reactive agent or suitable reactive agents) thereby to reduce the halo-organic content of the smaller particle size stream;
- subjecting (I) the resultant mix of milled materials from that milling procedure and (II) at least part of the larger particle size stream of that streaming procedure (optionally after washing thereof) to a blending procedure thereby to provide a blend which includes particle sizes larger than those of the milled materials; and
- either (i) reinstating the excavated site at least in part with that blend or (ii) reinstating the excavated site with other fill prior to, whilst and/or after disposing of that blend elsewhere.

The more contaminated smaller particle size stream may have an average particle size of 10 mm or less.

The smaller particle size stream may be derived by one or both of screening and/or identification the media as clay.

Preferably the milling is to submicron sizes.

At least the more contaminated smaller particle size stream may have been subjected to a drying procedure prior to milling. Preferably the drying has been of an unwashed solids stream.

Reactive agent or agents are preferably used in at least some of the milling.

The suitable reactive agent(s) and the milled materials are at least primarily solids e.g. quartz sand and the soil.

Preferably the milling is with a ball mill of the present invention.

The blend is preferably used for site reinstatement.

In another aspect the present invention consists in a **method of remediating a chemically contaminated matrix,** said method comprising the steps of
ensuring the matrix with any contamination is at least substantially dry,
milling the at least substantially dry matrix and any contaminating content in milling apparatus of any of the kinds previously described, and
harvesting the solid stream from the milling apparatus or subjecting it to blending and allowing at least a partial set thereof from a slurry.

Preferably matrix itself or any solids stream thereof is not subjected to washing.

Preferably the milling involves one or more reagent (e.g. quartz sand) and optionally any catalyst that may be considered desirable. Preferably the milling apparatus involves balls and preferably those balls are of steel but they can be of any other suitable impact material.

Preferably the milling apparatus is confined so as to reduce noise levels (e.g. in a transport container e.g. a 20 foot ISO container).

Optionally an inert gas or an oxygen low gas can be provided as the environment for the milling apparatus (e.g. by a nitrogen infusion).

Optionally a rotary drier is used to ensure the dryness of the matrix.

Optionally there can be dust and/or gas capture from any such drying apparatus.

Preferably there can be dust capture from any such harvesting stage or discharge from the milling apparatus.

In still a further aspect the present invention consists in **the use of milling apparatus** of any of the kinds previously described as the present invention.

In another aspect the invention is **a procedure for remediating soil** by subjecting a substantially dry solids stream of the soil, or a partitioned amount thereof, to milling so as to dislocate-Si-O- bonds of the soil and/or any added quartz or the like material(s) thereby to facilitate and/or cause breakdown of organohalogen content(s), the milling being in a horizontally shafted ball mill where the shaft has or carries ball agitator forms.

The milled materials may then be blended (e.g. with an oversize material as in the aforementioned specifications).

In yet a further aspect the present invention consists in **plant for remediating a matrix,** said plant including milling apparatus of any aspect of the present invention.

In yet a further aspect the present invention consists **the solids outfeed** of a procedure or method as aforesaid.

In a procedure of the present invention preferably ball speeds can be up to 20 metres/per sec and are at least 2 metres/per sec over part of each agitation.

Preferably the output product is submicron prior to any pugmill or other glomeration or blended remediation of the milled output.

In a preferred form each milling apparatus has
a housing with at least one end plate to define a chamber (preferably an at least substantially cylindrical chamber with the cylindrical axis at least substantially horizontal),
a shaft rotatable within the chamber, the shaft being bearing mounted outside of the end plated barrel from the end plate,
arms, paddles or other agitator forms ("agitators") rotatable with the shaft in the chamber, and
balls (or other impact masses) to be agitated by the agitators,
(and optionally a drive to the shaft).

Such an arrangement allows the bearing and its lubricants to be (i) sealed externally of the chamber, (ii) to be protected in a journal-box protected by one or more seal assembly from contamination from the chamber, and/or (iii) to have a lower operating temperature than in the chamber.

There are preferably two end plates of the housing, each preferably substantially parallel to the other.

Preferably at least one, if not both, end plates is detachable from the cylinder or the like of the housing e.g. by detachment of bolts from a flange to flange fitting.

Preferably the bearing is set out from the end plate but is carried by a support structure (in a journal-box assembly) fixed to the end plate. Preferably that support structure is in part skeletal.

Preferably there is an at least substantially similar mounting of a shaft supporting bearing externally of each end plate or externally of the chamber at each end region of the shaft.

In less desired forms of the present invention, one end plate can be welded or otherwise be integral with the cylinder.

Preferably the shaft rotates parallel to or co-actually with the preferred at least substantially cylindrical chamber axis.

Preferably there is a seal to the shaft from and/or outside of the end plate thereby providing a first sealed zone.

Preferably there is a second sealed zone outwardly of the first sealed zone yet inwardly of said bearing. Preferably that second sealed zone involves a sealing of the bearing to the shaft e.g. in conjunction with a closed bore about the bearing.

Preferably said second sealed zone has the effect of protecting the bearing against contamination that might pass through said first sealed zone.

Preferably an overcap attaches to the end plate thereby sealed zone(s) to seal the zone and bearing to said end plate.

Preferably one end of the shaft is adapted to receive a drive e.g. directly or indirectly from an electric motor or other mechanical drive.

Preferably the shaft has agitators keyed thereto.

Preferably the keying is not reliant upon a key way but rather relies upon a non-circular or non-rotational profile of the shaft to which the agitators complement e.g. preferably there is a hexagonal or other faceted profile to which the agitators match.

Preferably the paddles are arrayed so as to be staggered with respect to its neighbours about the shaft.

Preferably said housing has an inlet from above.

Preferably said inlet from above is non circumferential of the cylindrical chamber but can be so if desired.

Preferably there is a drop out outlet port for fine material.

Preferably the drop out port or outlet port is not disposed directly below the inlet but may be central or at one end on the shaft axis or indeed can be circumferential of the agitators.

Preferably the outlet port is provided with a grate or other forms to keep the balls within the chamber.

Preferably there is an outlet preferably from above for vapours and this outlet preferably feeds to a vapour treatment and/or capturing arrangement.

Preferably both the inlet and outlet ports, or one of them, includes a knife or other valve to control its opening.

Preferably said agitators have a clearance from the (preferably cylindrical) housing sufficient to allow about three balls spacing between the distal region of each agitator and the nearest inner surface of the chamber.

Preferably said balls are of a metal such as steel (e.g. stainless steel).

Preferably a conical or other structure is provided from the housing and/or the shaft to provide a component of directionality for in feed of material that drops from said inlet into the chamber.

Preferably said conical form is frustoconnical or otherwise but is directed from one end region of the chamber to the shaft below the inlet.

Preferably the arrangement is substantially hereinafter described with reference to any one or more of the accompanying drawings.

As used herein the term "and/or" means "and" or "or", or both.

As used herein the term "(s)" following a noun includes, as might be appropriate, the singular or plural forms of that noun.

The term "daisy-chained", "cascade", "procession of ball mills" are to be construed broadly.

### BRIEF DESCRIPTION OF DRAWINGS

Preferred forms of the present invention will now be described with reference to the accompanying drawings in which
**Figure 1** show a plant schematic suitable for treating a matrix that is a contaminated soil stockpile, the solid arrows showing the soil flow,
**Figure 1A** shows the flow of the plant of Figure 1,
**Figure 2** is a perspective view of a gang of shafted chambers in accordance with the present invention each operating as a milling apparatus (the balls or other impact elements not being shown) under the operation of a preferred gang drive and within a sound suppressing containment enclosure,
**Figure 3** is a closer detail of a soil and reagent feed hopper each with separate auger feed into the top most shafted chamber,
**Figure 4** is a close up of a shafted chamber showing a top feed point at or adjacent one end and an outlet at the other end from whence there can be a feed down to a feed in part of a reversed but preferably in line milling apparatus of the same kind thereby to reverse the flow direction as the chambers alternate, thereby reducing the footprint of the plant,
**Figure 5** is a perspective view of the apparatus of Figure 2 showing the drive pulleys preferred in conjunction with an electric motor, the gang of shafted chambers being supported from a tower frame,

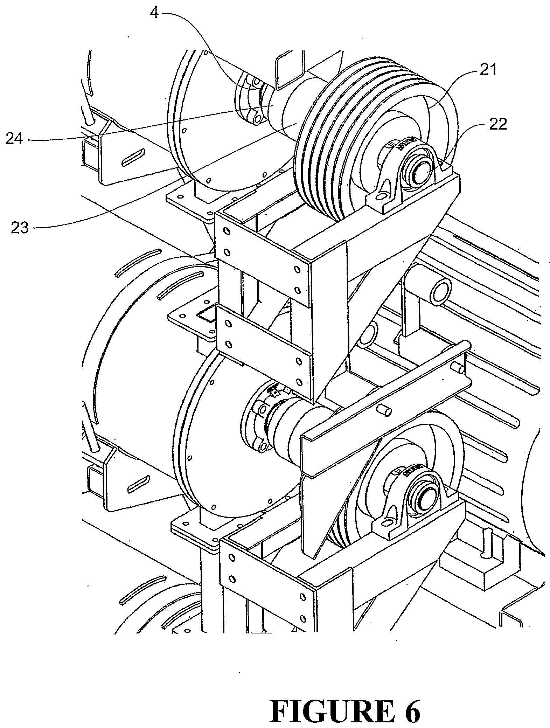

**Figure 6** is a closer view of two proximate parts of the gang shown in Figure 5,
**Figure 7** is a diagrammatic section of apparatus of the present invention (not showing the balls for clarity, the balls (e.g. of a size mentioned in the previously mentioned specifications) being at least to about the shaft level when static,
**Figure 8** is a ready to go milling apparatus of a kind coupled in Figure 7,
**Figure 9** shows the cradle and drive coupler that remains when the apparatus of Figure 8 has been removed,

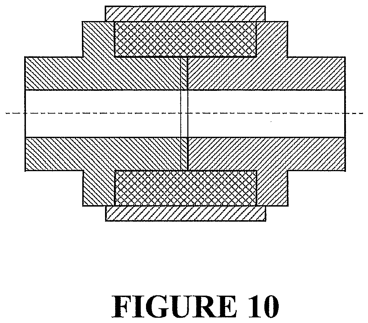

**Figure 10** shows the coupler in section (e.g. ATRA-FLEX™ flexible coupling available in New Zealand - www.johnbrooks.co.nz/couplingshtm),
**Figure 11** shows a flow diagram of a heavy metal stabilising regime for milled soils that can extend the value of the milling to reduce organic contamination,

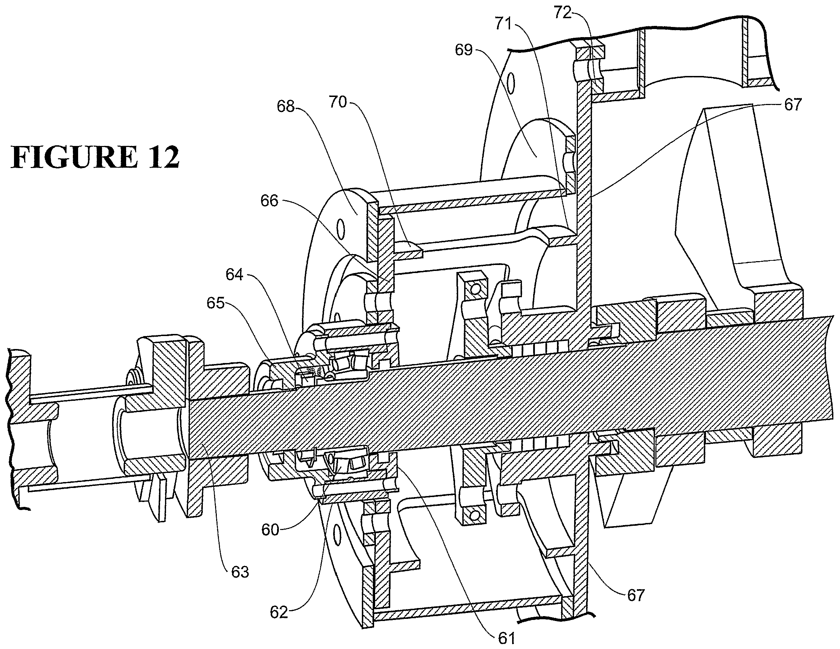

**Figure 12** is a close up of one end (the motor coupled end) of a to be motor coupled shaft option showing (as in our New Zealand patent application number 551486 of 21 November 2006) externally of the shaft and its in chamber carried agitator arm, paddle or like forms, a labyrinth type seal to the shaft (as a first sealed assembly) and outwardly therefrom (i.e. further to the left) a further sealed assembly to the shaft from a closed bore or through bore outside of which (but in the bore of which) is provided the bearing for the shaft, the bearing being housed in the bore along with the second sealing assembly on the rotational axis and supported back to the end plate of the casing,
**Figure 13** shows a tower having a vertical set of five reactors (housings, vessels and/or chambers) each directly driven by a motor drive and cascade feeding to a loading rotary mixer for blending with some infeed of blending materials, and
**Figure 14** shows the tower of Figure 13 as having two vertical sets such as can altogether be contained in a containment.

In the preferred form of the present invention a shafted chamber 1 is defined by end plates 2 and 3 of a cylindrical containment 5 for the balls and media. The plates carry therethrough a shaft 4. As can be seen (at least with the plate 3), preferably there is a bearing support 5 for the shaft 4 from one (and preferably each) end plate.

The drum like surround 5 is preferably provided with a flange connectable feed port 6 on the top at one end and a discharge 7 via the plate at the other end. Alternatively a downwardly directed flanged outlet could be provided from at or adjacent the region 8.

As can be seen a plurality of staggered forms 9 are positioned to rotate in unison with the shaft 4 as it is rotated. This has the effect of agitating the balls (not shown) which partly fill the containment area of the chamber.

Optionally a vent port 10 (preferably flanged) can be provided, e.g. to allow dust and/or gaseous environment control.

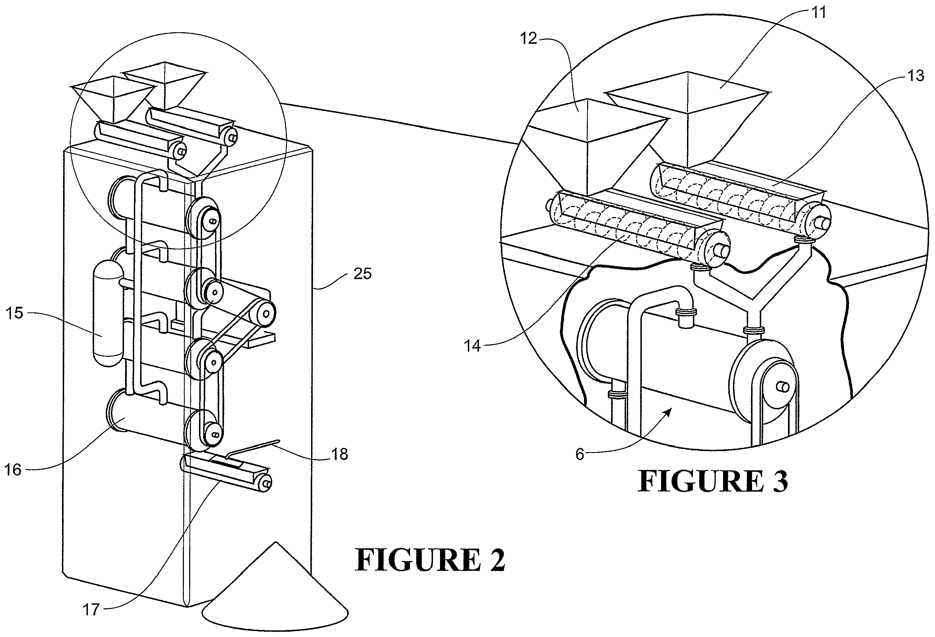

Figure 2 shows a series of 4 shafted chambers driven under, as an option to separate drive for each, a ganged drive of belts or other flexible drives whereby, if desired, a nitrogen or other inert gas supply 15 can provide for an inert atmosphere in each of the chambers. Alternately there can be a direct drive of or to each shaft (mechanical, hydraulic and/or electrical) (e.g. of motors via a dogged or other connection).

As can be seen in Figure 3 hoppers 11 and 12 can feed via augers 13 and 14 respectively into an inlet 6 of a top most shafted chamber 6 as shown.

The milled or being milled material(s) then passes down via the lower shafted chambers prior to the dumping from the lower most shafted chamber 16 into a pugmill 17 where the materials are, at least to some extent, agglomerated under the action of a water infeed 18.

The pugmill arrangement at the bottom of the tower has the purpose of treating/processing the soil that has been subjected to the milling action of the gang of ball agitating shafted chambers and any reagents deemed desirable.

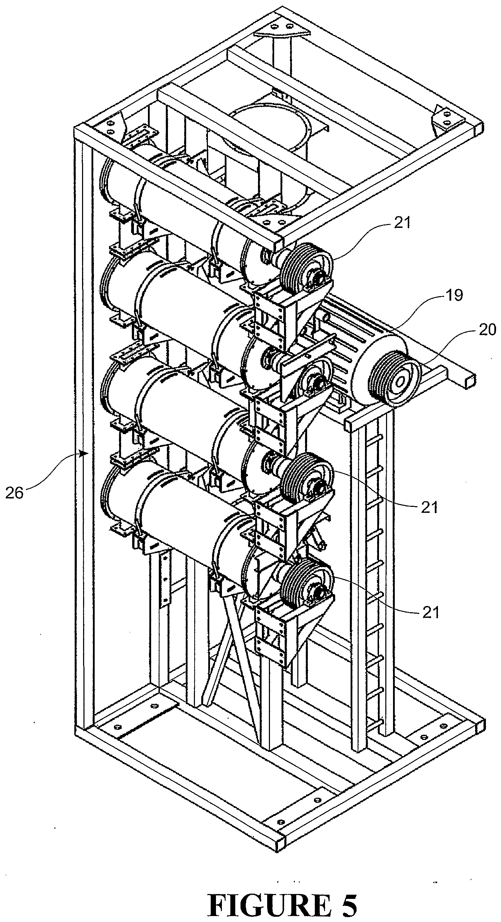

Figure 5 shows the arrangement of Figure 2 where an electric motor 19 drives a drive pulley to be linked to each of the driven pulleys 21.

A feature of the arrangement as described is the ability for a sound suppressing confinement 25 by a transportation container about the tower structure 26 of Figure 5 to keep noise levels generally low while still providing an outlet from the enclosure 25.

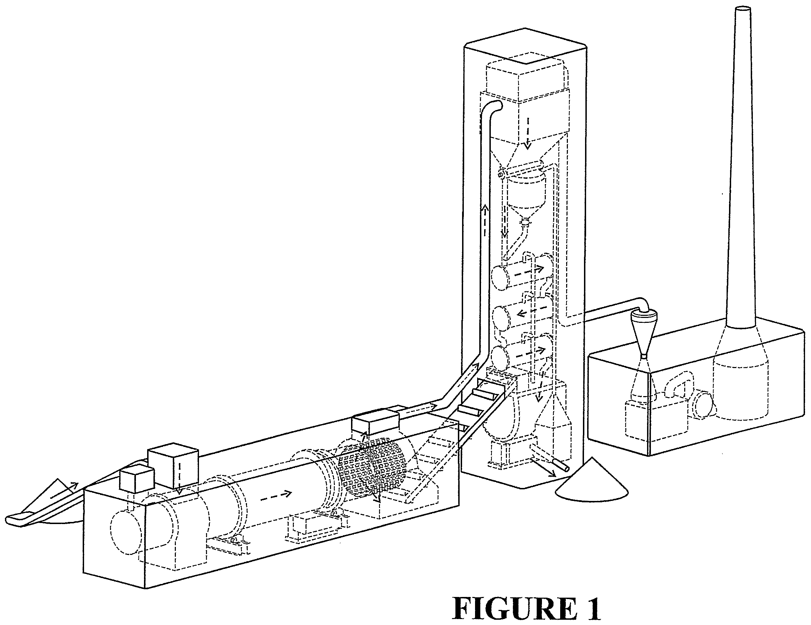

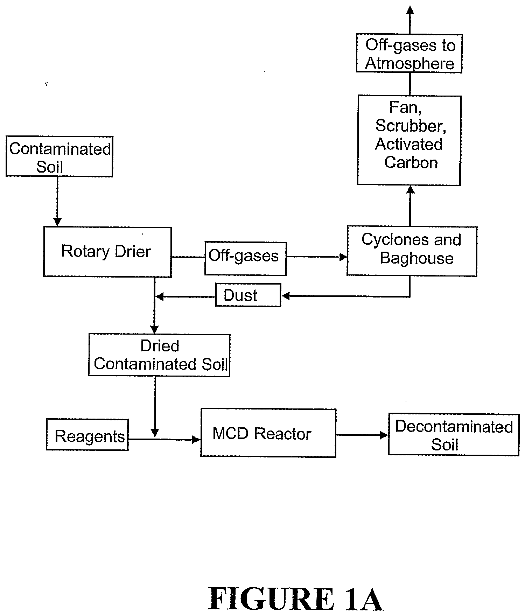

As can be seen in Figure 1 there is a flow through of the soil stockpile through preferably a rotary drier and from thence up a feed to the hopper 11 at which stage any reagents can be mixed therewith at the entry into the topmost shafted chamber 6.

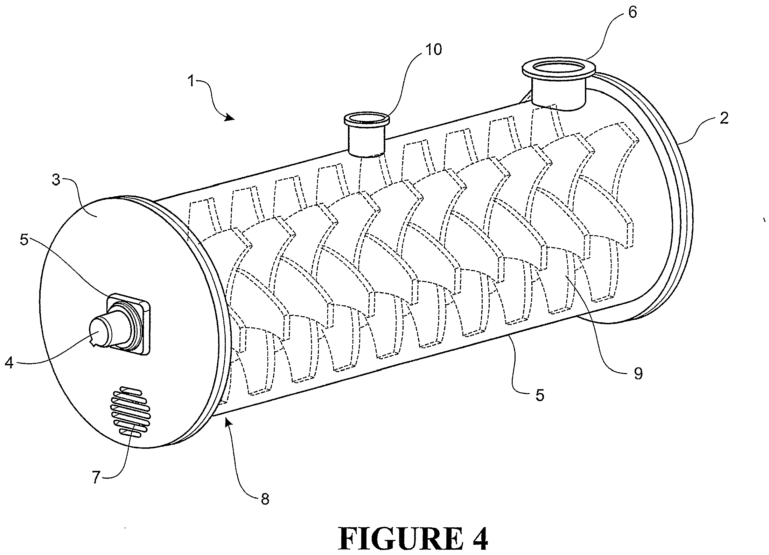

In preferred forms of the present invention each impact/flinger form on a shaft is cast or fabricated (for example with a hexagonal, square or octagonal sleeve) to be sleeved in a non rotatory manner on the shaft 4 so that the stagger between such elements as shown in Figure 4 is perpetuated irrespective of rotational use and rotational direction. Reverse driving can double impact form life.

Operation of the plant can be by any of the methods and procedures described in the aforementioned patent specifications; it can alternatively be a reagentless milling or can involve reagents, e.g. quartz and any optional catalyst. The important feature is to monitor this through put so that it is appropriate that where reagents are required, they are in fact used to ensure the desired monitored outcome.

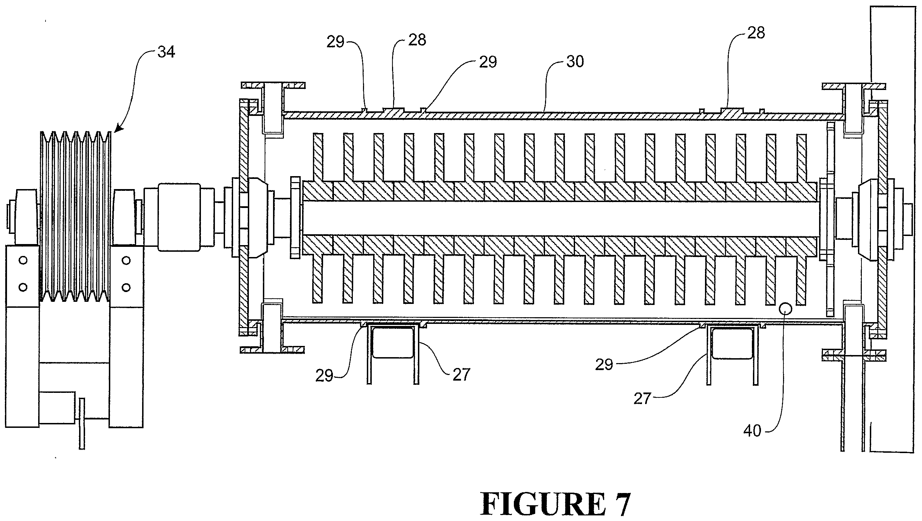

Figures 7 through 9 show in stylised section firstly the assembly as in a stack with a cradle 27 having belted thereto (steel belting 28) between guides 29 of the chamber or drum 30 thereby to stabilise the same with the shaft 31 aligned appropriately for coupling by its coupler 32 to the coupler 33 on the pulley shaft of the drive arrangement 34 shown. Shaft 31 is preferably hexagonal inside hexagonal sleeves of each impactor/flinger form 35 and is bearing mounted at 36 and 37 in plates 38 and 39.

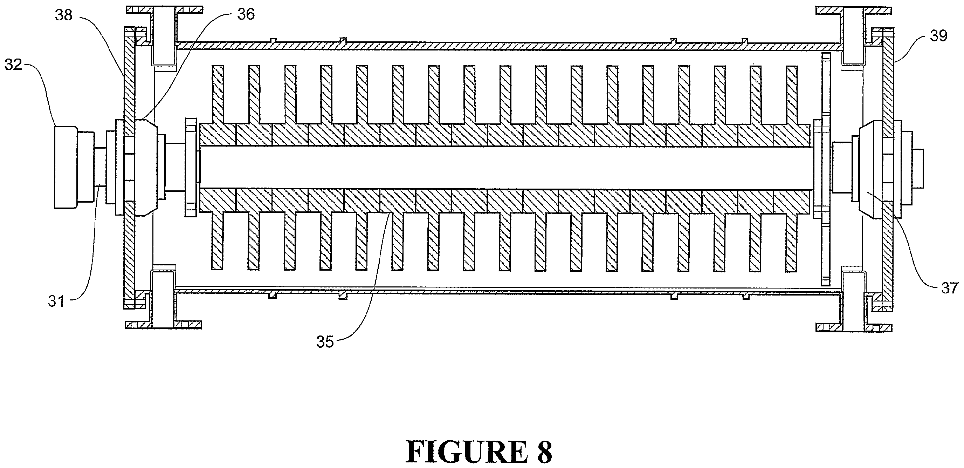

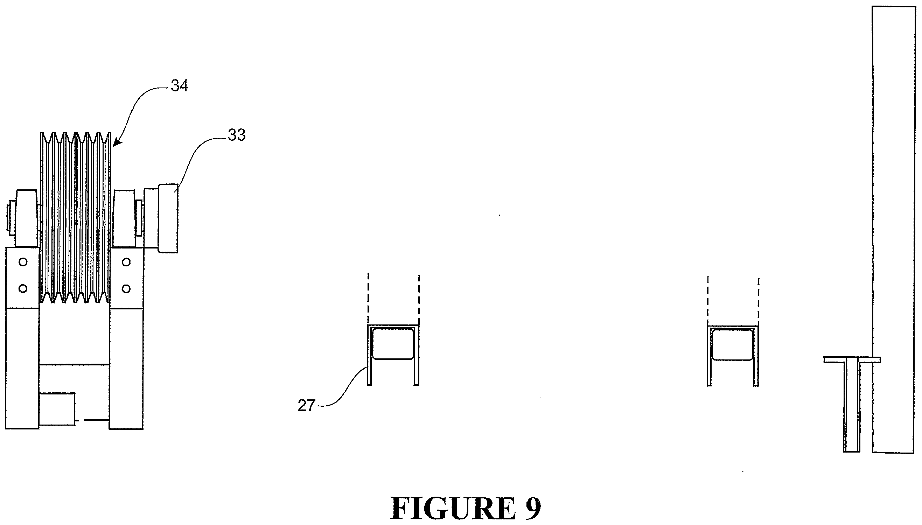

Figure 8 shows the removable milling unit that is ready to go (showing only one ball 40 of the many balls to be therein) whilst Figure 9 shows the residue of the mount and drive after removal of that part shown in Figure 8 from the assembly shown in Figure 7.

It can be seen there is a stably supported pulley shaft if a pulley can, if desired, be belt driven and that shaft carries the coupler from which the coupler carried by the shaft of the drum or chamber on its bearings is to be aligned reliance preferably on the cradle.

This enables "ready to go" replacements to be quickly refitted in two hours or less during any maintenance period. Simple cradle/belting, coupling, flange bolting allows the drive and flow paths to be made good.

Preferably milled materials have a final particle size of less than 100 microns, preferably very much less e.g. sub 1 micron.

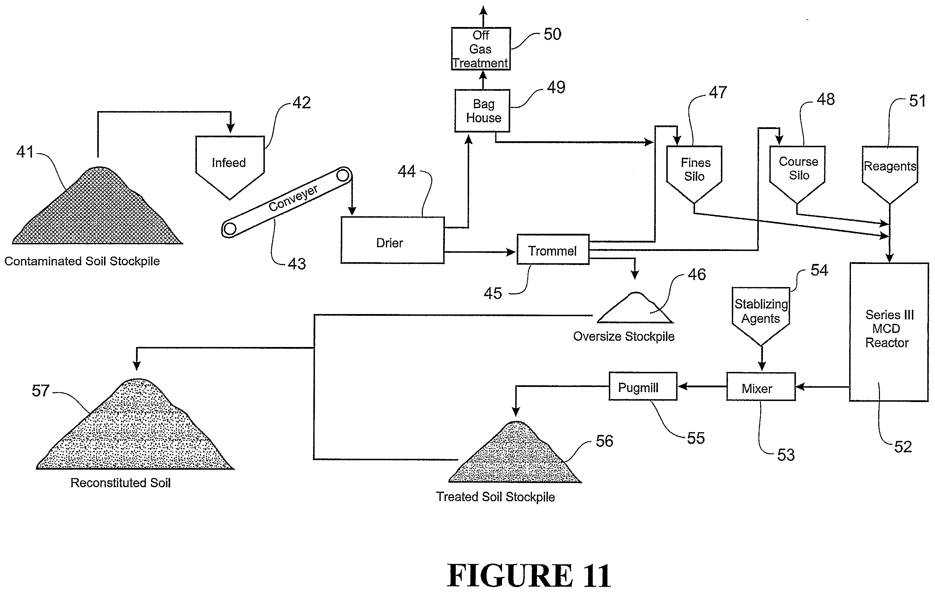

Figure 11 shows the soil remediation flow as preferred in the remediation process subject to our patent application filed simultaneously herewith. The blending (e.g. in a concrete type mixer or other) takes advantage of the preferred submicron post milling particle size, where metallic impurities are, for better stabilisation against leaching or translocation of those metallic values.

Figure 11 as a flow diagram shows a preferred flow diagram where a contaminated soil stockpile 41 is fed as an infeed into a hopper 42 and from thence to a conveyor 43. The contaminated soil is then passed into a rotary drier or other drier 44 from whence it is passed via a trommel 45 as an oversize stream to an oversize stockpile 46. The non oversize stream is separated two ways with fines passing into a fines silo 47 and coarser materials into a coarse silo 48.

Dust and vapours of the drier 44 pass through a bag house 49 and, after off gas treatment at 50, there is venting to atmosphere. Moreover recovered fines at the bag house 49 are fed to the fines silo 47.

The fines and coarse streams of 47 and 48 respectively are fed with milling reagents in hopper 51 into the milling apparatus 52 which preferably is a stack of "ready to go" mills (collectively as a "reactor") as previously stated. This reactor is to be known as a Series III MCD™ reactor. It feeds the milled materials to a mixer 53 into which is added the stabilising agents from a hopper feed 54. The output from the mixer 53 then passes via a plug mill 55 (or any suitable rotary blender) thereby to provide a treated soil stockpile 56. Materials of the oversize stockpile 46 that have not been milled and the (usually sub 10 micron down to submicron) materials of the treated soil stockpile 56 can then be blended by any appropriate mixing (e.g. a concrete mixer or otherwise) to provide a reconstituted soil stockpile or the equivalent 57. Suitable mixing agents include dry agents capable of setting from a slurry e.g. portland cement, lime, etc.

The person skilled in the art will appreciate how metal values in their existing, but usually a different form, can be stabilised with a choice of appropriate stabilising agents in hopper 54. Such stabilisation preferably reduces leaching by virtue of the metal values being held physically and/or preferably in an insoluble form.

A shaft supporting means in an alternative form of the present invention is shown in Figure 12. Figure 12 shows a bearing 60 outwardly of a sealing assembly 61 which seals with appropriate rings, o-rings or other members the journal-box assembly 62 to the shaft 63. The "bore" of the journal-box assembly 62 that supports the bearing 60 provides an appropriate rotational axis for the bearing. Other seals or the like members (seal assemblies 64) can be provided outwardly of the bearing 60 but within the journal-box assembly 62. As shown a cap 65 can be fitted as a part thereof. Such a cap 65 is connected to the journal-box assembly 62 by appropriate bolting. The journal-box assembly 62 and the cap 65 are fixed to the plate 66, which in turn is fixed to end plate 67. Member 68 is preferably fixed by a flange 69 as part of an overcap assembly also to the end plate 67. The plate 66 however is preferably fully supported (i.e.; when the overcap is removed) by the inpart skeletal structure 70 welded or otherwise affixed at the region 71 to the endplate 67. The end plate 67 is preferably bolted to a flange 72 of a shafted chamber 1.

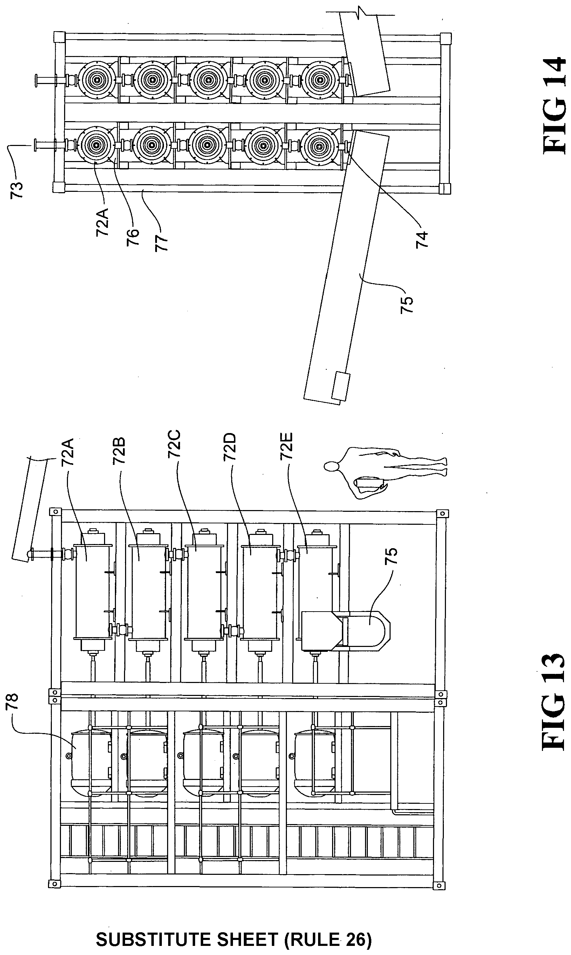

Figures 13 and 14 show a cascade of reactors as in Figure 12 from the inlet of 72A via 72B via 72C via 72D to the out of 72E which feeds a rotary blender 75 or a pug mill or a direct feed to a rotary blender (optionally through surge but not discontinuous storage).

Motors 78 etc drive the shafts of each reactor 72A to 72E directly through a disconnectable link (e.g. dogs, clutch or the like). A flexible coupling as previously mentioned is preferred.

Shown is the first inlet 73 and the last or bottom most outlet of the chambers.

Each reactor is fixed by flanges 76 to structural members of the tower frame 77.

The present invention provides an alternative to existing procedures.

In this specification where reference has been made to patent specifications, other external documents, or other sources of information, this is generally for the purpose of providing a context for discussing the features of the invention. Unless specifically stated otherwise, reference to such external documents is not to be construed as an admission that such documents, or such sources of information, in any jurisdiction, are prior art, or form part of the common general knowledge in the art.

## Claims

1. A milling apparatus for remediating a chemically contaminated matrix, comprising ;
a first housing defining a first chamber (1) having an inlet (6) and an outlet, having an at least substantially horizontal shaft (4) rotatably driveable from externally of the first chamber (1) to allow rotation in either direction, having agitator formations (9) of or carried by the shaft (4) within the first chamber (1), and having impact masses confined in the first chamber (1) and energisable within the first chamber (1) upon rotation of the shaft (4) and its agitator formations (9),
a second housing defining a second chamber having an inlet and an outlet, having an at least substantially horizontal shaft rotatably driveable from externally of the second chamber to allow rotation in either direction, having the agitator formations of or carried by the shaft within the second chamber, and having impact masses confined in the second chamber and energisable within the second container upon rotation of the shaft and the agitator formations, the inlet of the second chamber being adapted to receive material(s) from the outlet of the first chamber, and
a third housing defining a third chamber having an inlet and an outlet, having an at least substantially horizontal shaft rotatably driveable from externally of the third chamber to allow rotation in either direction, having the agitator formations of or carried by the shaft within the third chamber, and having impact masses confined in the third chamber and energisable within the third chamber upon rotation of the shaft and its agitator formations, the inlet of the third chamber being adapted to receive material(s) from the outlet of the second chamber,
one housing defining a chamber having an inlet and an outlet, having an at least substantially horizontal shaft rotatable in the chamber having agitator formations of or carried by the shaft in the chamber and having impact masses confined in the chamber and energisable within the chamber upon rotation of the shaft and its agitator formations, the inlet of the chamber being adapted to receive material(s) from the outlet of the third chamber, and
wherein there is in close proximity a pug mill blender or a rotary blender (17) and the outlet of the last of the chambers discharges continuously to a pug mill blender or a rotary blender (17),
wherein each of the agitator formations (9) is sleeved on the shaft in a non-rotary manner so that a stagger between the agitator formations (9) is perpetuated along the shaft.

2. Milling apparatus of claim 1 having three or more said housings each supported on an assembly on which each shaft receives a drive of its shaft.

3. Milling apparatus of claim 2 wherein each chamber discharges via its outlet assisted by gravity and each receives material(s) via its inlet assisted by gravity.

4. Milling apparatus of any one of the preceding claims wherein said chambers are at least substantially horizontally aligned cylindrical chambers each with a top inlet near one end and a bottom outlet near the other ends.

5. Milling apparatus of claim 4 wherein, as a stack or tower of supported housings there is a staggering of the inlet ends and outlet ends down the stack or tower.

6. Milling apparatus of any one of the preceding claims when in a containment structure that allows single or multiple infeeds to atop most housing via its inlet or via inlets.

7. A plant for milling material(s) comprising of a series of the milling apparatus as defined in claims 1 to 6.

8. A method of remediating a chemically contaminated matrix, said method comprising the steps of ensuring the matrix with any contamination is at least substantially dry,
milling the at least substantially dry matrix and any contaminating content in milling apparatus of any one of claims 1 to 6, and
harvesting the solid stream from the milling apparatus or subjecting it to blending and allowing at least a partial set thereof from a slurry form.

## Patentansprüche

1. Mahlvorrichtung zum Sanieren einer chemisch kontaminierten Matrix, umfassend:
ein erstes Gehäuse, welches eine erste Kammer (1) definiert, welche einen Einlass (6) und einen Auslass aufweist, aufweisend eine wenigstens im Wesentlichen horizontale Welle (4), welche von außerhalb der ersten Kammer (1) rotierbar antreibbar ist, um eine Rotation in beide Richtungen zu erlauben, aufweisend Rühranordnungen (9) von der oder getragen durch die Welle (4) innerhalb der ersten Kammer (1), und aufweisend Wirkungsmassen, welche innerhalb der ersten Kammer (1) eingeschlossen und innerhalb der ersten Kammer (1) auf eine Rotation der Welle (4) und ihrer Rühranordnungen (9) hin erregbar sind,
ein zweites Gehäuse, welches eine zweite Kammer definiert, welche einen Einlass und einen Auslass aufweist, aufweisend eine wenigstens im Wesentlichen horizontale Welle, welche von außerhalb der zweiten Kammer rotierbar antreibbar ist, um eine Rotation in beide Richtungen zu erlauben, aufweisend die Rühranordnungen von der oder getragen durch die Welle innerhalb der zweiten Kammer, und aufweisend Wirkungsmassen, welche innerhalb der zweiten Kammer eingeschlossen sind und innerhalb des zweiten Behälters auf eine Rotation der Welle und der Rühranordnungen hin erregbar sind, wobei der Einlass der zweiten Kammer dazu eingerichtet ist, Material(ien) vom Auslass der ersten Kammer zu erhalten, und
ein drittes Gehäuse, welches eine dritte Kammer definiert, welche einen Einlass und einen Auslass aufweist, aufweisend eine wenigstens im Wesentlichen horizontale Welle, welche von außerhalb der dritten Kammer rotierbar antreibbar ist, um eine Rotation in beide Richtungen zu erlauben, aufweisend die Rühranordnungen von der oder getragen durch die Welle innerhalb der dritten Kammer, und aufweisend Wirkungsmassen, welche in der dritten Kammer eingeschlossen und innerhalb der dritten Kammer auf eine Rotation der Welle und ihrer Rühranordnungen hin erregbar sind, wobei der Einlass der dritten Kammer dazu eingerichtet ist, Material(ien) vom Auslass der zweiten Kammer zu erhalten,
ein Gehäuse, welches eine Kammer definiert, welche einen Einlass und einen Auslass aufweist, aufweisend eine wenigstens im Wesentlichen horizontale Welle, welche in der Kammer rotierbar ist, aufweisend Rühranordnungen von der oder getragen durch die Welle in der Kammer, und aufweisend Wirkungsmassen, welche in der Kammer eingeschlossen und innerhalb der Kammer auf eine Rotation der Welle und ihrer Rühranordnungen hin erregbar sind, wobei der Einlass der Kammer dazu eingerichtet ist, Material(ien) vom Auslass der dritten Kammer zu erhalten, und
wobei sich in der Nähe ein Mischtrommelmischer oder ein Rotationsmischer (17) befindet und der Auslass der letzten der Kammern kontinuierlich an einen Mischtrommelmischer oder einen Rotationsmischer (17) abgibt,
wobei jede der Rühranordnungen (9) an der Welle in einer nichtrotierenden Weise eingehüllt ist, so dass eine Staffelung zwischen den Rühranordnungen (9) entlang der Welle fortgesetzt wird.

2. Mahlvorrichtung nach Anspruch 1, aufweisend drei oder mehr der Gehäuse, welche alle an einer Anordnung getragen sind, an welcher jede Welle einen Antrieb ihrer Welle erhält.

3. Mahlvorrichtung nach Anspruch 2, wobei jede Kammer über ihren Auslass unterstützt durch die Schwerkraft ausgibt und Material(ien) über ihren Einlass unterstützt durch die Schwerkraft erhält.

4. Mahlvorrichtung nach einem der vorhergehenden Ansprüche, wobei die Kammern wenigstens im Wesentlichen horizontal ausgerichtete zylindrische Kammern sind, alle mit einem oberen Einlass nahe einem Ende und einem unteren Auslass nahe den anderen Enden.

5. Mahlvorrichtung nach Anspruch 4, wobei als Stapel oder Turm von getragenen Gehäusen eine Staffelung der Einlassenden und der Auslassenden den Stapel oder Turm hinab vorliegt.

6. Mahlvorrichtung nach einem der vorhergehenden Ansprüche, wenn in einer Behälterstruktur, welche eine einzelne oder mehrfache Eingabe an das oberste Gehäuse über seinen Einlass oder über Einlässe erlaubt.

7. Anlage zum Mahlen von Material(ien), umfassend eine Reihe der Mahlvorrichtung nach Ansprüchen 1 bis 6.

8. Verfahren zum Sanieren einer chemisch kontaminierten Matrix, wobei das Verfahren die Schritte eines Sicherstellens, dass die Matrix mit einer beliebigen Kontamination wenigstens im Wesentlichen trocken ist, ein Mahlen der wenigstens im Wesentlichen trockenen Matrix und jedes kontaminierenden Inhaltsstoffs in einer Mahlvorrichtung nach einem der Ansprüche 1 bis 6, und
ein Sammeln des festen Stroms aus der Mahlvorrichtung oder ein einem Mischen Unterziehen davon und einem Erlauben wenigstens eines teilweisen Verfestigens davon aus einer Schlammform, umfasst.

## Revendications

1. Appareil de broyage pour la restauration d'une matrice contaminée chimiquement, comprenant :
un premier boîtier définissant une première chambre (1) ayant une entrée (6) et une sortie, ayant un arbre au moins sensiblement horizontal (4) pouvant être entraîné de manière rotative depuis l'extérieur de la première chambre (1) pour permettre une rotation dans les deux sens, ayant des formations d'agitation (9) de ou supportées par l'arbre (4) à l'intérieur de la première chambre (1), et ayant des masses d'impact confinées dans la première chambre (1) et activables à l'intérieur de la première chambre (1) lors d'une rotation de l'arbre (4) et de ses formations d'agitation (9),
un second boîtier définissant une seconde chambre ayant une entrée et une sortie, ayant un arbre au moins sensiblement horizontal pouvant être entraîné en rotation depuis l'extérieur de la seconde chambre pour permettre une rotation dans les deux sens, ayant les formations d'agitation de ou supportées par l'arbre à l'intérieur de la seconde chambre, et ayant des masses d'impact confinées dans la deuxième chambre et activables à l'intérieur du second conteneur lors d'une rotation de l'arbre et des formations d'agitation, l'entrée de la seconde chambre étant adaptée pour recevoir du ou des matériaux depuis la sortie de la première chambre,
un troisième boîtier définissant une troisième chambre ayant une entrée et une sortie, ayant un arbre au moins sensiblement horizontal pouvant être entraîné en rotation depuis l'extérieur de la troisième chambre pour permettre une rotation dans les deux sens, ayant les formations d'agitation de ou supportées par l'arbre à l'intérieur de la troisième chambre, et ayant des masses d'impact confinées dans la troisième chambre et activables à l'intérieur de la troisième chambre lors d'une rotation de l'arbre et de ses formations d'agitation, l'entrée de la troisième chambre étant adaptée pour recevoir du ou des matériaux depuis la sortie de la seconde chambre,
un boîtier ayant une entrée et une sortie, ayant un arbre au moins sensiblement horizontal susceptible de tourner dans la chambre ayant des formations d'agitation de ou supportées par l'arbre dans la chambre et ayant des masses d'impact confinées dans la chambre et activables à l'intérieur de la chambre lors d'une rotation de l'arbre et de ses formations d'agitation, l'entrée de la chambre étant adaptée pour recevoir du ou des matériaux depuis la sortie de la troisième chambre, et
dans lequel il y a à proximité un mélangeur à hélice ou un mélangeur rotatif (17), et la sortie de la dernière des chambres se décharge de manière continue vers un mélangeur à hélice ou un mélangeur rotatif (17),
dans lequel chacune des formations d'agitation (9) est manchonnée sur l'arbre d'une manière non rotative, de sorte qu'un échelonnement entre les formations d'agitation (9) se perpétue le long de l'arbre.

2. Appareil de broyage selon la revendication 1, comportant trois boîtiers ou plus supportés chacun sur un ensemble sur lequel chaque arbre reçoit un entraînement de son arbre.

3. Appareil de broyage selon la revendication 2, dans
lequel chaque chambre se décharge via sa sortie par l'intermédiaire de la gravité, et reçoit le ou les matériaux via son entrée par l'intermédiaire de la gravité.

4. Appareil de broyage selon l'une quelconque des revendications précédentes, dans lequel lesdites chambres sont des chambres cylindriques alignées au moins sensiblement horizontalement, chacune avec une entrée supérieure près d'une extrémité et une sortie inférieure près des autres extrémités.

5. Appareil de broyage selon la revendication 4, dans
lequel, sous la forme d'une pile ou d'une tour de boîtiers supportés, il existe un échelonnement des extrémités d'entrée et des extrémités de sortie vers le bas de la pile ou de la tour.

6. Appareil de broyage selon l'une quelconque des revendications précédentes, dans une structure de confinement qui permet une alimentation unique ou multiple vers la plupart des boîtiers via son entrée ou via ses entrées.

7. Installation pour broyer du ou des matériaux comprenant une série de l'appareil de broyage selon les revendications 1 à 6.

8. Procédé de réhabilitation d'une matrice chimiquement contaminée, ledit procédé comprenant les étapes consistant à assurer que la matrice avec toute contamination est au moins sensiblement sèche,
broyer la matrice au moins sensiblement sèche et tout contenu contaminant dans un appareil de broyage selon l'une quelconque des revendications 1 à 6, et
récolter le flux solide provenant de l'appareil de broyage ou le soumettre à un mélange et autoriser au moins un durcissement partiel de celui-ci à partir d'une forme de boue.
